(19) Europäisches Patentamt / European Patent Office / Office européen des brevets

(11) **EP 2 191 293 B1**

(12) **EUROPÄISCHE PATENTSCHRIFT**

(45) Veröffentlichungstag und Bekanntmachung des Hinweises auf die Patenterteilung:
**04.05.2011 Patentblatt 2011/18**

(51) Int Cl.:
***G01S 7/527*** *(2006.01)*     ***G01S 15/93*** *(2006.01)*
***G01S 13/93*** *(2006.01)*

(21) Anmeldenummer: **08786265.2**

(22) Anmeldetag: **18.07.2008**

(86) Internationale Anmeldenummer:
**PCT/EP2008/059485**

(87) Internationale Veröffentlichungsnummer:
**WO 2009/030554 (12.03.2009 Gazette 2009/11)**

(54) **OBJEKTKLASSIFIZIERUNGSVERFAHREN, EINPARKHILFEVERFAHREN UND EINPARKHILFESYSTEM**

OBJECT CLASSIFICATION METHOD, PARKING ASSISTANCE METHOD, AND PARKING ASSISTANCE SYSTEM

PROCÉDÉ DE CLASSIFICATION D'OBJET, PROCÉDÉ D'AIDE AU STATIONNEMENT ET SYSTÈME D'AIDE AU STATIONNEMENT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **05.09.2007 DE 102007042220**

(43) Veröffentlichungstag der Anmeldung:
**02.06.2010 Patentblatt 2010/22**

(73) Patentinhaber: **Robert Bosch GmbH**
**70442 Stuttgart (DE)**

(72) Erfinder:
  • **FRANK, Michael**
    **75015 Bretten (DE)**
  • **FABER, Petko**
    **71272 Renningen (DE)**

(56) Entgegenhaltungen:
**EP-A- 1 562 050      EP-A- 1 643 271
EP-A- 1 764 630      DE-A1- 4 208 595
DE-A1- 10 323 639**

EP 2 191 293 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

STAND DER TECHNIK

Die vorliegende Erfindung betrifft ein Objektklassifizierungsverfahren, ein Einparkhilfeverfahren und ein Einparkhilfesystem zur Ausgabe von Einparkhinweisen an einen Fahrer eines Fahrzeugs.

Die zunehmende Verkehrsdichte und verstärkte Bebauung freier Flächen engen den Verkehrsraum insbesondere in Ballungszentren kontinuierlich ein. Der zur Verfügung stehende Parkraum wird enger und die Suche nach einer geeigneten Parklücke belastet den Fahrer zusätzlich zum immer mehr zunehmenden Verkehr. Daher wurden Systeme zur Parklückenlokalisierung und semiautonome Einparkhilfesysteme entwickelt, welche den Fahrer beim Einparken unterstützen sollen. Dem Fahrer wird dadurch die Entscheidung, ob eine vorhandene Parklücke für einen Einparkvorgang ausreicht, erleichtert oder abgenommen., und das Einparkhilfesystem liefert Warnsignale, welche dem Fahrer beim Einparken in die Parklücke assistieren.

Im Rahmen eines solchen Einparkhilfesystems ist eine Klassifizierung der die Fahrbahn oder die Parklücke begrenzenden Objekte (z.B. Bordstein, geparkte Autos usw.) in überfahrbare und nicht überfahrbare Objekte wünschenswert. Eine derartige Klassifizierung ermöglicht beispielsweise die entsprechende Anpassung der Einparktrajektorie und der Endposition des Fahrzeugs. Beispielsweise wäre es möglich, das Heck während des Einparkvorgangs über als überfahrbar klassifizierte Objekte ragen zu lassen oder sogar den von als überfahrbar klassifizierten Objekten eingenommen Raum als Parkraum zu nutzen.

In diesem Zusammenhang schlägt die DE 103 23 639A1 ein Verfahren vor, gemäß welchem die Empfangssignale von als sehr niedrig eingeordneten Objekten (z.B. Rollsplitt oder kleine Kieselsteine) als Störsignale betrachtet werden und die Empfindlichkeitsparameter der Sensoreinrichtung zur Vermeidung der Erfassung dieser Störsignale verändert werden. Allerdings ist dieses Verfahren nur zur Berücksichtigung bzw. Filterung ausgesprochen niedriger Objekte geeignet, nicht jedoch zur generellen Unterscheidung zwischen überfahrbaren und nicht überfahrbaren Objekten.

Zudem ist aus EP 1 643 271 bekannt, die Sensorempfindlichkeit in Abhängigkeit vom zurückgelegten Weg des Fahrzeugs zu verringern.

Es ist ferner bekannt, dass die Höhe eines Objekts bestimmte Kenngrößen des von Einparkhilfesystem empfangenen Empfangssignals verändert. Beispielsweise führt ein höheres Objekt in der Regel zu einer höheren Signalamplitude und einem breiteren Echoimpuls. Allerdings hat sich gezeigt, dass derartige Kenngrößen stark von den klimatischen Bedingungen sowie auch von der Form und Struktur des Objekts abhängen, so dass eine Nutzung solcher Kenngrößen zur zuverlässigen qualitativen Einschätzung der Höhe des Objekts bisher nicht möglich war.

Es besteht somit ein Bedarf für eine verbesserte Klassifizierung von Objekten in überfahrbare und nicht überfahrbare Objekte, beispielsweise in einem Einparkhilfesystem zur Unterstützung eines Einparkvorgangs eines Fahrzeugs.

VORTEILE DER ERFINDUNG

Demgemäß ist ein Objektklassifizierungsverfahren vorgesehen zur Klassifizierung eines Objekts, insbesondere in einem Einparkhilfeverfahren zur Unterstützung eines Einparkvorgangs eines Fahrzeugs, bei dem sich das Fahrzeug auf das Objekt zu bewegt, wobei das Objektklassifizierungsverfahren die folgenden Schritte aufweist:

(a) Ermitteln einer ersten Kenngröße aus dem Verlauf eines mit einem distanzmessenden Sensor empfangenen Empfangssignals;
(b) Ermitteln einer weiteren Kenngröße aus dem Verlauf eines mit einem distanzmessenden Sensor empfangenen Empfangssignals;
(c) Ermitteln einer von dem Fahrzeug zwischen Schritt (a) und Schritt (b) zurückgelegten Strecke;
(d) Ermitteln einer Vorhersagegröße aus der ermittelten ersten Kenngröße, wobei die Vorhersagegröße der in Schritt (c) ermittelten Strecke zugeordnet ist;
(e) Vergleichen der Vorhersagegröße mit der in Schritt (b) ermittelten weiteren Kenngröße; und
(f) Erzeugen eines dem Objekt zugeordneten Objektklassifikationssignals, welches einen ersten Zustand aufweist, falls die Vorhersagegröße kleiner als die weitere Kenngröße ist und welches einen zweiten Zustand aufweist, falls die Vorhersagegröße größer oder gleich der weiteren Kenngröße ist.

Ein entsprechendes Einparkhilfesystem zur Unterstützung eines Einparkvorgangs eines Fahrzeugs, bei dem sich das Fahrzeug auf ein Objekt zu bewegt, weist Folgendes auf:

-    einen distanzmessenden Sensor, der periodisch ein Sendesignal vom Fahrzeug in Richtung des Objekts aussendet und ein von dem Objekt reflektiertes Empfangssignal empfängt;

- eine programmgesteuerte Einrichtung, die
  eine erste Kenngröße aus dem Verlauf eines mit dem distanzmessenden Sensor empfangenen Empfangssignals ermittelt;
  eine weitere Kenngröße aus dem Verlauf eines mit dem distanzmessenden Sensor empfangenen Empfangssignals ermittelt;
  eine von dem Fahrzeug zwischen dem Ermitteln der ersten Kenngröße und dem Ermitteln der zweiten Kenngröße zurückgelegte Strecke ermittelt;
  eine Vorhersagegröße aus der ersten ermittelten Kenngröße ermittelt, wobei die Vorhersagegröße der weiteren ermittelten Strecke zugeordnet ist;
  die Vorhersagegröße mit der weitere Kenngröße vergleicht; und
  ein dem Objekt zugeordneten Objektklassifikationssignals erzeugt, welches einen ersten Zustand aufweist, falls die Vorhersagegröße kleiner als die tatsächliche Kenngröße ist und welches einen zweiten Zustand aufweist, falls die Vorhersagegröße größer oder gleich der tatsächlichen Kenngröße ist.

Die der Erfindung zugrunde liegende Idee ist es, die örtliche Änderung einer Kenngröße des Empfangssignals als Indikator für eine qualitative Aussage über die Höhe eines Objektes, insbesondere über dessen Überfahrbarkeit heranzuziehen.

Zwar ist eine solche qualitative Aussage im Prinzip schon aufgrund eines Vergleichs von nur zwei an unterschiedlichen Orten ermittelten Empfangssignalverläufen möglich, allerdings ist es vorteilhaft, wenn die Schritte (b) bis (f) periodisch wiederholt werden, weil dies eine kontinuierliche Überprüfung der Überfahrbarkeit eines Objekts im vom Sensor erfassten Bereich ermöglicht.

In einer vorteilhaften Weiterbildung weist das erfindungsgemäße Verfahren ferner die folgenden Schritte auf:

(g) Ermitteln, ob die Reihe von nacheinander ermittelten Kenngrößen ein lokales Maximum aufweist; und
(h) Erzeugen eines dem Objekt zugeordneten Objektklassifikationssignals mit dem ersten Zustand, falls ermittelt wurde, dass die Reihe von nacheinander ermittelten tatsächlichen Kenngrößen ein lokales Maximum aufweist.

Somit kann eine korrekte Klassifizierung von überfahrbaren Objekten schon zu einem früheren Zeitpunkt während des Einparkvorgangs stattfinden.

In Schritt (d) kann die Vorhersagegröße aus einer mathematischen Verknüpfung mit einem Dämpfungsfaktor ermittelt werden. Beispielsweise kann in Schritt (d) die Vorhersagegröße im Wesentlichen durch Multiplikation der in Schritt (a) ermittelten ersten Kenngröße mit einem Faktor $e^{kx}$ bestimmt wird, wobei k der Dämpfungsfaktor und x die in Schritt (c) ermittelte Strecke ist. Somit wird berücksichtigt, dass bestimmte Kenngrößen in einem exponentiellen Zusammenhang mit dem Abstand zwischen Sensor und Objekt stehen.

Es ist vorteilhaft, denn Dämpfungsfaktor (k) in Abhängigkeit von den klimatischen Bedingungen einzustellen. Dies ermöglicht eine akkuratere Klassifizierung. Beispiele für klimatische Bedingungen sind Außentemperatur, Luftdruck und Niederschlag.

Die Kenngröße kann beispielsweise die Amplitude eines lokalen Maximums im Empfangssignal angeben, insbesondere ein lokales Maximum des ersten Echoimpulses. Eine andere mögliche Kenngröße ist die Impulsbreite des ersten Echoimpulses. Ferner ist es auch möglich, mehrere von verschiedenen Sensoren oder vom selben Sensor ermittelte Empfangssignale zunächst einer statistischen Auswertung zu unterziehen und dann eine statistische Größe (z.B. Standardabweichung der Amplitude des ersten Echoimpulses, Mittelwert oder dergl.) als Kenngröße zu verwenden.

Die mit dem Objektklassifizierungsverfahren ermittelten Informationen (in Form des Objektklassifizierungssignals) können in einem Einparkhilfeverfahren verwendet bzw. weiterverarbeitet werden. Ein solches erfindungsgemäßes Einparkhilfeverfahren zur Unterstützung eines Einparkvorgangs eines Fahrzeugs umfasst das oben beschriebene Objektklassifizierungsverfahren, und weist zusätzlich die folgenden Schritte auf:

(i) Bestimmen eines momentanen Abstandes des Fahrzeugs zu dem Objekt; und
(j) Ausgeben eines Warnsignals, falls der momentane Abstand geringer als ein Mindestabstand ist, wobei der Mindestabstand vom Zustand des Objektklassifikationssignals abhängt.

Der distanzmessende Sensor ist vorteilhafterweise an einem Heckbereich oder an einem Frontbereich des Fahrzeugs vorgesehen.

Ein erfindungsgemäßes Computerprogramm weist Programmcodemittel auf, um alle Schritte eines Verfahrens nach einem der vorhergehenden Ansprüche durchzuführen, wenn das Computerprogramm auf einem Computer oder einer Recheneinheit ausgeführt wird.

Die Erfindung wird nachfolgend anhand der in den schematischen Figuren der Zeichnung angegebenen Ausführungsbeispiele näher erläutert. Es zeigen dabei:

Fig. 1          ein schematisches Diagramm eines Fahrzeugs mit einem Einparkhilfesystem gemäß einer Ausführungsform der vorliegenden Erfindung;

Fig. 2          den Signalverlauf der Hüllkurve eines von einem der am Heck angeordneten Abstandssensoren ausgegebenen Sensorsignals in Abhängigkeit von der Zeit;

Fign. 3A bis 3D  die Veränderung der vom Sensor gemessenen Kenngröße A in Abhängigkeit von der Zeit für den Fall, dass sich das Fahrzeug mit konstanter Geschwindigkeit auf ein Hindernis zu bewegt.

Fig. 4          ein Flussdiagramm eines ersten Ausführungsbeispiels eines Objektklassifizierungsverfahrens; und

Fig. 5          ein Flussdiagramm eines zweiten Ausführungsbeispiels eines Objektklassifizierungsverfahrens.

BESCHREIBUNG DER AUSFÜHRUNGSBEISPIELE

In allen Figuren der Zeichnung sind gleiche bzw. funktionsgleiche Elemente - sofern nichts anderes angegeben ist - mit gleichen Bezugszeichen versehen worden.

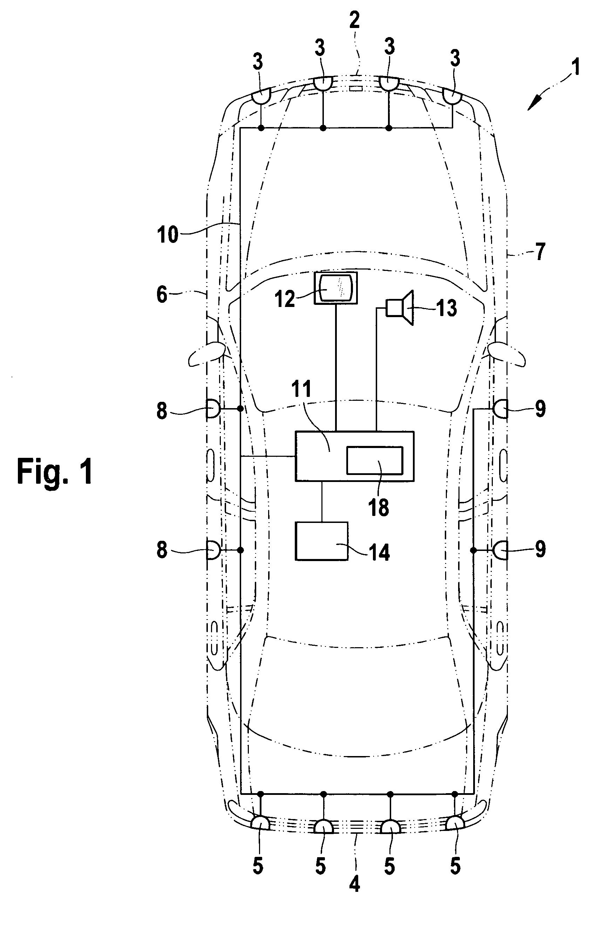

Fig. 1 zeigt ein schematisches Diagramm eines Fahrzeugs mit einem Einparkhilfesystem gemäß einer Ausführungsform der vorliegenden Erfindung. An einer Fahrzeugvorderseite 2 des Fahrzeugs 1 sind Abstandssensoren 3 angeordnet. An einer Fahrzeugrückseite 4 sind ebenfalls Abstandssensoren 5 angeordnet. An einer linken Fahrzeugseite 6 können ferner seitliche Abstandssensoren 8 und an einer rechten Fahrzeugseite 7 können seitliche Abstandssensoren 9 vorgesehen sein. Die Abstandssensoren dienen der Messung von Abständen zu Hindernissen in der Fahrzeugumgebung. Die Abstandssensoren 3, 5, 8, 9 können in der vorliegenden Ausführungsform beispielsweise als Ultraschallsensoren ausgebildet sein. Die Abstandssensoren 3, 5, 8, 9 liefern ihre Sensorsignale über einen Datenbus 10 an eine programmgesteuerte Einrichtung 11 (beispielsweise ein Mikroprozessor, Mikrocontroller oder dergleichen) mit einem Speicher 18 im Fahrzeug 1. Die programmgesteuerte Einrichtung 11 ermittelt anhand der von den Abstandssensoren 3, 5, 8, 9 zugeführten Sensorsignalen Abstände zu Hindernissen in der Fahrzeugumgebung und die Lage dieser Hindernisse in der Fahrzeugumgebung. Zur genauen Bestimmung der Lage der Hindernisse, kann sich die programmgesteuerte Einrichtung 11 auch das Prinzip der Triangulation zunutze machen, wobei die von den verschiedenen Sensoren ermittelten Abstandswerte miteinander abgeglichen werden. Die programmgesteuerte Einrichtung 11 ermittelt ferner, ob die Objekte in der Fahrzeugumgebung überfahrbar oder nicht überfahrbar sind. Dies wird im Folgenden noch detailliert ausgeführt.

Die programmgesteuerte Einrichtung 11 kann ferner dazu ausgelegt sein, eine geeignete Parklücke zu ermitteln und gegebenenfalls eine Fahrtrajektorie sowie Endposition in dieser Parklücke zu bestimmen. Außerdem bestimmt sie bevorzugt auch Ausgaben an den Fahrer. Für die Ausgabe ist die programmgesteuerte Einrichtung 11 mit einem Warnsignalgeber verbunden, der als Anzeige 12 und/oder als Lautsprecher 13 ausgebildet sein kann. Die Anzeige 12 kann insbesondere als ein Bildschirm einer Navigationsanzeige in dem Fahrzeug ausgeführt sein. Ferner können Anweisungen auch über eine Anzeige in einem Kombinationsinstrument, über ein Head-Up-Display oder über LED-Anzeigen, die zusätzlich an der Armaturentafel zu montieren sind, ausgegeben werden. Mit Hilfe der Anzeige 12 bzw. dem Lautsprecher 13, können beispielsweise Hinweise ausgegeben werden, die dem Fahrer beispielsweise mitteilen, dass das Fahrzeug sich auf ein nicht überfahrbares Hindernis zu bewegt. Um eine Bewegung oder auch die Geschwindigkeit des Fahrzeugs zu ermitteln, kann die programmgesteuerte Einrichtung 11 ferner mit einem Geschwindigkeits- und Lenkwinkelsensor14 verbunden sein.

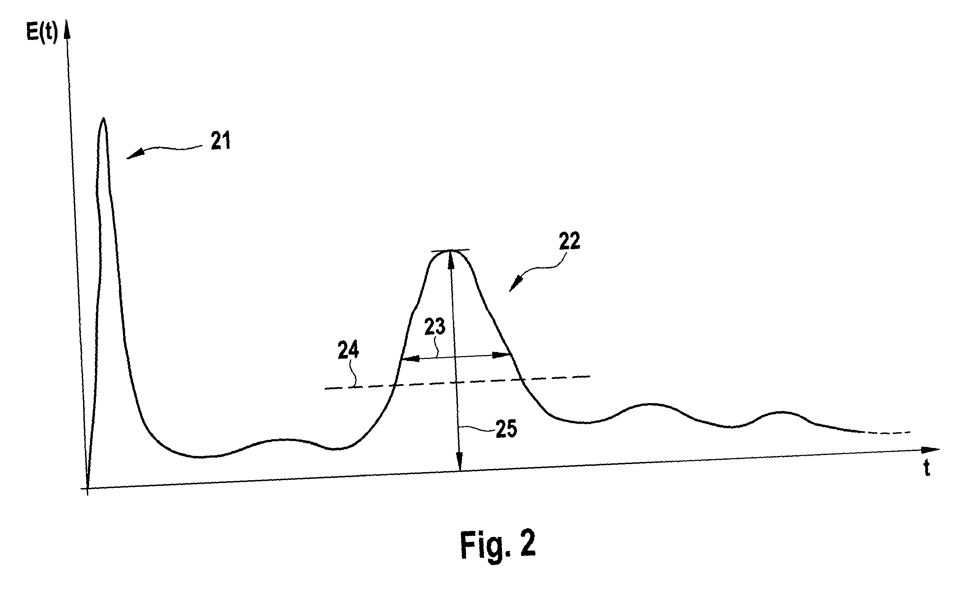

Fig. 2 zeigt beispielhaft den Signalverlauf E(t) der Hüllkurve eines von einem der am Heck angeordneten Abstandssensoren 5 ausgegebenen Sensorsignals in Abhängigkeit von der Zeit t, für den Fall, dass sich das Fahrzeug beim rückwärts Einparken mit seinem Heck auf ein nicht überfahrbares Hindernis (Objekt), wie z.B. eine Mauer, zu bewegt. Das von der Mauer reflektierte Signal wird vom Abstandssensor 5 aufgenommen, und von einem geeigneten Wandler (z.B. einem Ultraschallwandler) des Abstandssensors in ein elektrisches Sensorsignal umgewandelt. Fig. 2 zeigt einen typischen Signalverlauf der Hüllkurve, mit einem so genannten Anfangsübersprecher 21. Ein von einem Hindernis reflektierter Echoimpuls 22 gibt einen Hinweis darauf, dass sich in der Messkeule des Sensors 5 ein Objekt befindet.

Bei dem so genannten Echosignalverfahren entspricht die Zeitdauer vom Aussenden des Signals bis zum Auftreten des Echoimpulses 22 der Entfernung des so abgetasteten Objekts vom Sender (Abstandssensor). Die Zeit vom Aussenden des Ultraschallimpulses bis zum Auftreten des Echoimpulses 22 entspricht somit (aufgrund der Hin- und Rücklaufzeit) der doppelten Zeit, die ein Impuls benötigt, den Weg zwischen dem Sensor und dem Hindernis zurückzulegen. Durch Lokalisieren des Beginn des Impulses kann die programmgesteuerte Einrichtung 11 somit den Abstand von einem sich in der Messkeule des Abstandssensors befindlichen Hindernis ermitteln.

Die Form des Impulses 22 ist durch mehrere Kenngrößen gekennzeichnet, so zum Beispiel durch die Amplitude 25 des Impulses 22, seiner Halbwertsbreite 23, oder auch die Breite des Impulses bezogen auf einen (ggf. zeitveränderlichen) Schwellwert 24. Diese Kenngrößen hängen von der Form und Struktur des Objektes, also insbesondere auch von seiner Höhe, sowie vom Abstand zwischen dem Sensor 5 und dem Objekt ab. Im Folgenden wird von der Impulsamplitude 25 (Kenngröße A) als charakteristische Kenngröße ausgegangen, es ist aber ebenso möglich, eine oder mehrere andere Größen als Kenngrößen heranzuziehen.

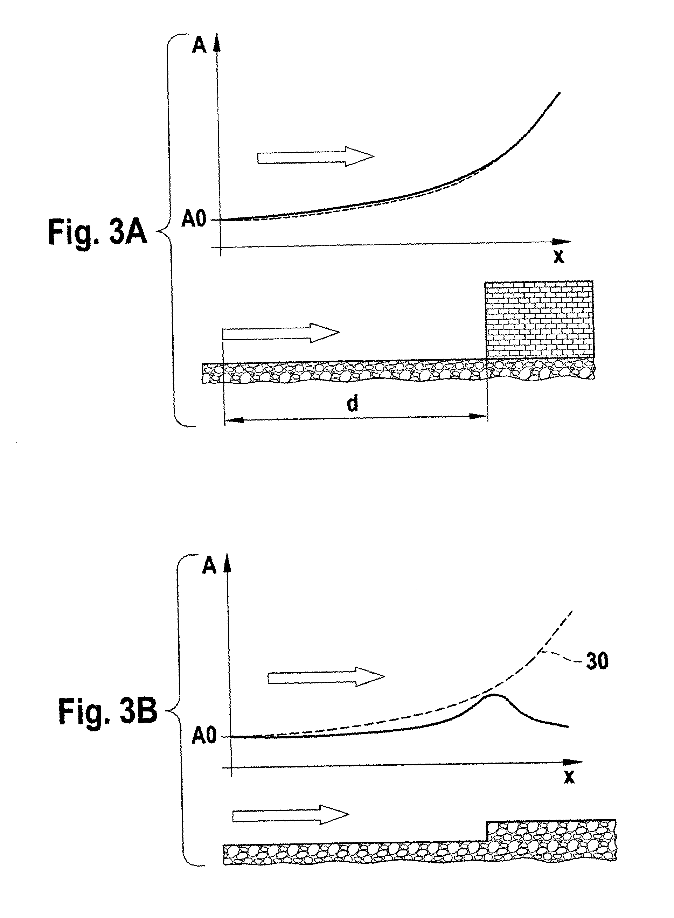

Die Fign. 3A bis 3D veranschaulichen die Veränderung der von einem der Sensoren 5 gemessenen Kenngröße A in Abhängigkeit von der Zeit für den Fall, dass sich das Fahrzeug 1 mit konstanter Geschwindigkeit auf ein Hindernis zu bewegt.

Fig. 3A zeigt im oberen Teil einen Graphen, der schematisch den Verlauf der Kenngröße A über den Ort darstellt, für den Fall, dass sich das Fahrzeug 1 auf ein nicht überfahrbares Hindernis (z.B. eine Mauer oder ein weiteres Fahrzeug) in Pfeilrichtung zu bewegt, wie schematisch im unteren Teil von Fig. 3A angedeutet ist. Der Abstand zum Hindernis nimmt mit zunehmender Zeit ab. Gleichzeitig nimmt die Amplitude A zu, und zwar im Wesentlichen exponentiell, so dass folgende Formel (1) gilt:

$$A(x) \approx A0 \cdot e^{kx} \hspace{3cm} (1)$$

Hierbei ist A0 die Kenngröße bei einem bestimmten Abstand d und x ist die Distanz, die sich das Fahrzeug 1 vom Ort x > 1 in Richtung auf das Objekt hin bewegt hat. k ist ein Dämpfungsfaktor, welcher von dem Übertragungsmedium und somit von den Witterungsbedingungen (z.B. Temperatur, Luftdruck, Niederschlag) abhängen kann. Nähert sich also das Fahrzeug 1 dem Hindernis, dann nimmt in diesem Fall die charakteristische Kenngröße A exponentiell mit abnehmender Distanz zum Hindernis zu. Der Verlauf der Kenngröße A entspricht einer Referenzkurve 30 (siehe z.B. Fig. 3B bis 3D).

Fig. 3B zeigt im oberen Teil einen Graphen, der schematisch den Verlauf der Kenngröße A über den Ort darstellt, für den Fall, dass sich das Fahrzeug 1 auf ein überfahrbares Hindernis (z.B. einen Bordstein) zu bewegt, wie schematisch im unteren Teil von Fig. 3B angedeutet.

Auch hier nimmt die Kenngröße A exponentiell mit abnehmendem Abstand vom Fahrzeug zum Hindernis zu, allerdings nicht so stark wie im in Fig. 3A dargstellten Fall. Die Kenngröße A bleibt also unterhalb der strichliert gezeichneten Referenzkurve 30. Dies ist durch die Form des Hindernisses bedingt, welches einen Großteil des vom Sensor 5 ausgesandten Sendesignals in eine Richtung reflektiert, in welcher es nicht mehr vom Sensor 5 erfasst werden kann. Das vom Sensor 5 erfasste Signal entspricht daher lediglich dem von einem relativ kleinen Bereich an der oberen Kante des Hindernisses reflektierten Signal. Ferner nimmt die Kenngröße A nur bis zu einem lokalen Maximum zu und fällt danach ab. Diese Abnahme der Kenngröße A ist durch die Form der Messkeule bedingt. Die Messkeule breitet sich kegelförmig vom Sensor 5 aus. Folglich kann der Sensor 5 Objekte, die sehr nahe am Fahrzeug sind, nur erfassen, wenn sie eine bestimmte Höhe aufweisen. Anders ausgedrückt, wenn der Sensor 5 sich zu nahe an einem niedrigen Objekt befindet, dann "schaut" der Sensor über das Objekt hinweg und kann es nicht mehr erfassen.

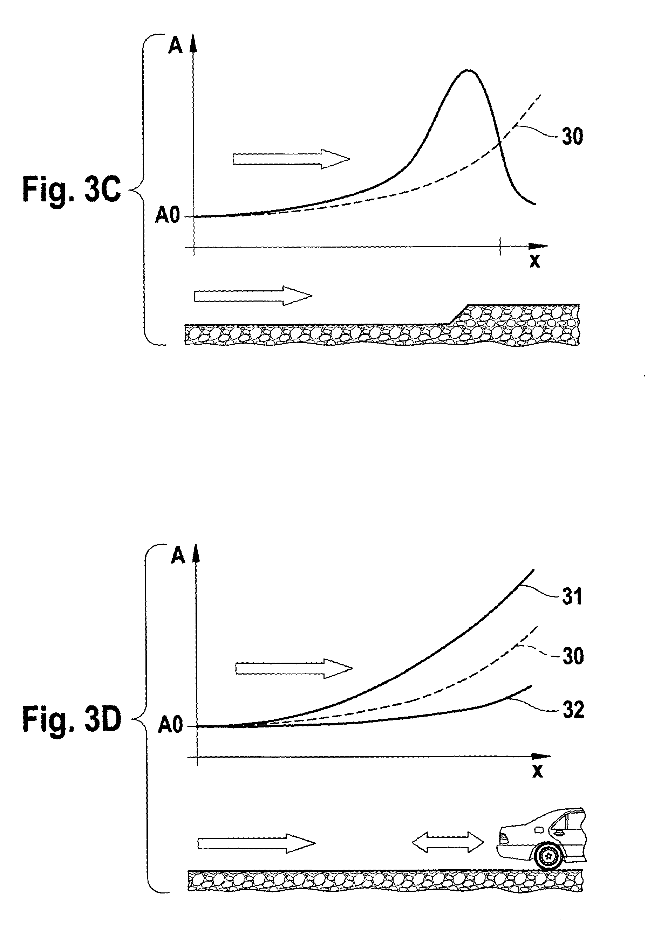

Fig. 3C zeigt im oberen Teil einen Graphen, der schematisch den Verlauf der Kenngröße A über den Ort darstellt, für den Fall, dass sich das Fahrzeug 1 auf ein überfahrbares Hindernis (z.B. einen Bordstein) zu bewegt, wie schematisch im unteren Teil von Fig. 3C angedeutet.

Auch in Fig. 3C ist ein lokales Maximum zu erkennen, welches aus den für Fig. 3B dargelegten Gründen auftritt. Der in Fig. 3C gezeigte Graph unterscheidet sich jedoch von dem in Fig. 3B gezeigten Graphen dadurch, dass die Kenngröße A bei größeren Abständen (also kleineren Werten für x) über der strichliert gezeichneten Referenzkurve 30 liegt. Dies liegt wiederum an der Form des Hindernisses. Ist das Hindernis, wie in Fig. 3C gezeigt, ein angeschrägter Bordstein, dann weist das Hindernis eine relativ große Fläche auf, die nahezu senkrecht zur Ausbreitungsrichtung des vom Sensor 5 ausgestrahlten Sendesignals liegt. Folglich weist das Hindernis einen großen Rückstreuquerschnitt auf, welcher zu größeren Reflexionsanteilen führt.

Fig. 3D zeigt schließlich im oberen Teil einen Graphen, der schematisch den Verlauf der Kenngröße A über den Ort darstellt, für die zwei Fälle, dass sich das Fahrzeug 1 auf ein nicht überfahrbares eigenbewegtes Hindernis (z.B. ein weiteres Fahrzeug) zu bewegt, wie schematisch im unteren Teil von Fig. 3D angedeutet.

Es sollte an dieser Stelle nochmals betont werden, dass die Variable x nicht unbedingt von der tatsächlichen Distanz d zum Hindernis abhängt, sondern lediglich die Wegstrecke x angibt, die das Fahrzeug 1 ab einer bestimmten Ausgangsposition zurückgelegt hat. Ferner gilt auch in Fig. 3D die Annahme, dass sich das Fahrzeug 1 mit konstanter Geschwindigkeit bewegt. Ist nun das Hindernis eigenbewegt und bewegt sich (zusätzlich zur Bewegung des Fahrzeugs 1) auf das Fahrzeug 1 zu, dann verhält sich die Kenngröße A wie der obere Graph 31 und liegt oberhalb der Referenzkurve 30.

Ist dagegen das Hindernis eigenbewegt und bewegt sich (zusätzlich zur Bewegung des Fahrzeugs 1) vom Fahrzeug 1 weg, dann verhält sich die Kenngröße A wie der untere Graph 32 und liegt unterhalb der Referenzkurve 30. Dabei stellt der untere Graph 32 jedoch den Fall dar, dass sich das Fahrzeug 1 immer noch auf das Hindernis zu bewegt, oder mit anderen Worten, die Geschwindigkeit des Hindernisses geringer ist als die des Fahrzeugs 1. Bewegt sich das Hindernis schneller als das Fahrzeug 1 und in die gleiche Richtung, dann nimmt die Kenngröße bei zunehmendem x ab (hier nicht dargestellt).

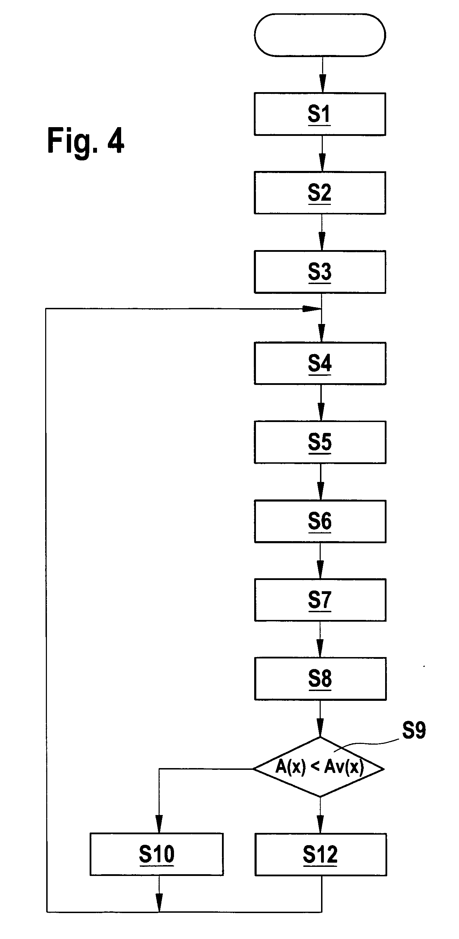

Auf Basis dieser Vorüberlegungen ist es nun möglich, ein Verfahren bzw. ein System zu konstruieren, welches eine verbesserte Klassifizierung von Objekten ermöglicht, auf die sich das Fahrzeug 1 während des Einparkvorgangs zu bewegt. Fig. 4 zeigt ein Flussdiagramm eines ersten Ausführungsbeispiels eines Objektklassifizierungsverfahrens im Rahmen eines Einparkhilfeverfahrens zur Unterstützung eines Einparkvorgangs, welches vom oben beschriebenen Einparkhilfesystem durchgeführt werden kann.

In Schritt S1 sendet zumindest einer der Sensoren 3 oder 5 beim Einparken ein Sendesignal in Fahrtrichtung aus, also einer der Sensoren 5 beim Rückwärtseinparken oder einer der Sensoren 3 beim Vorwärtseinparken. Im Folgenden wird davon ausgegangen, dass das Fahrzeug 1 rückwärts eingeparkt wird und sich das Heck des Fahrzeugs 1 mit bekannter Geschwindigkeit einem Hindernis nähert. Relevant sind somit die Empfangssignale der Sensoren 5, und im vorliegenden Beispiel wird die Auswertung des Empfangssignals eines der Sensoren 5 beschrieben.

In Schritt S2 empfängt der Sensor 5 das von dem Objekt reflektierte Signal und leitet das Empfangssignal an die programmgesteuerte Einrichtung 11 weiter.

In Schritt S3 unterzieht die programmgesteuerte Einrichtung 11 das Empfangssignal (genauer gesagt die Hüllkurve des Empfangssignals) einer Signalverarbeitung, und ermittelt eine (tatsächliche) Kenngröße A0 aus dem Empfangssignal. Im vorliegenden Fall ist die Kenngröße die Amplitude 25 des ersten Echoimpulses 22.

Die Schritte S4 bis S6 entsprechen im Wesentlichen den Schritten S1 bis S3. Das heißt, in Schritt S4 sendet der Sensor 5 erneut ein Sendesignal, und in Schritt S5 empfängt der Sensor 5 das vom Objekt reflektierte Empfangssignal, woraufhin hin Schritt S6 eine Kenngröße A aus dem Empfangssignal ermittelt wird.

In Schritt S7 ermittelt die programmgesteuerte Einrichtung 11 die Strecke x, die das Fahrzeug 1 zwischen den Schritten S2 und S6 zurückgelegt hat. Dies kann beispielsweise durch Integrieren eines vom Geschwindigkeitssensor 14 ausgegebenen Geschwindigkeitssignals über die Zeit geschehen.

In Schritt S8 ermittelt die programmgesteuerte Einrichtung 11 aus der in Schritt S7 ermittelten Strecke x sowie der in Schritt S3 ermittelten Kenngröße A0 einen Vorhersagegröße Av, und zwar beispielsweise nach folgender Formel (2):

$$\text{Formel (2)} \qquad Av = A0 \cdot e^{kx}$$

wobei k den oben beschriebenen Dämpfungsfaktor darstellt.

In Schritt S9 vergleicht die programmgesteuerte Einrichtung 11 diese Vorhersagegröße Av mit der in Schritt S6 ermittelten tatsächlichen Kenngröße A. Ist die Vorhersagegröße Av kleiner als die tatsächlichen Kenngröße A, dann springt das Verfahren zu S 10. Ist die Vorhersagegröße Av dagegen größer oder gleich der tatsächlichen Kenngröße A, dann springt das Verfahren zu S 12.

In Schritt S10 erzeugt die programmgesteuerte Einrichtung 11 ein Objektklassifikationssignal mit einem ersten Zustand, wohingegen die programmgesteuerte Einrichtung 11 in Schritt S 12 ein Objektklassifikationssignal mit einem zweiten Zustand erzeugt. Der erste und der zweite Zustand unterscheiden sich, beispielsweise hinsichtlich ihres Signalpegels. Das Objektklassifikationssignal kann intern von der programmgesteuerte Einrichtung 11 weiterverarbeitet werden. Insbesondere kann es zur Entscheidung ob und welche Warnhinweise an den Nutzer ausgegeben werden herangezogen werden. Beispielsweise kann die programmgesteuerte Einrichtung 11 derart eingerichtet sein, dass sie während eines Rückwärts-Einparkvorgangs ein Warnsignal ausgibt, falls der Abstand zwischen dem Fahrzeug 1 und einem sich hinter dem Fahrzeug befindlichen, von den Sensoren 5 erfassten Objekt geringer als ein bestimmter Warnabstand ist. Dabei kann dieser Warnabstand davon abhängen, ob das Objekt als überfahrbar (also wenn ein Objektklassifikationssignal des ersten Zustands ausgegeben wird) oder nicht überfahrbar (also wenn ein Objektklassifikationssignal des zweiten Zustands ausgegeben wird) klassifiziert wird. Beispielsweise kann der Warnabstand bei überfahrbaren Objekten um eine bestimmte Länge länger gestaltet werden, um somit zu berücksichtigen, dass zumindest das Heck des Fahrzeugs 1 gefahrlos über niedrige Objekte ragen kann.

Nach dem Schritt S10 bzw. S12 kehrt die Prozedur zu Schritt S4 zurück und die Schritte S4 bis S10/S12 werden wiederholt.

Mit dem oben beschriebenen Verfahren wird somit eine zuverlässige Klassifizierung von Objekten in überfahrbare und nicht überfahrbare Objekte ermöglicht. Es sollte beachtet werden, dass im oben beschriebenen Verfahren Objekte im Zweifelsfall zunächst als nicht überfahrbar klassifiziert werden. Ein solcher Fall liegt beispielsweise zu Beginn der in Fig. 3C dargestellten Situation vor. Obwohl es sich hierbei um ein überfahrbares Objekt (angeschrägter Bordstein) handelt, ähnelt die Kurve für relativ kleine Werte von x der Kurve 31 in Fig. 3D für ein nicht überfahrbares eigenbewegtes Objekt. Eine Klassifizierung des Objekts als überfahrbares Objekt findet erst zu dem Zeitpunkt statt, wenn die Amplitude A(x) unter die Vorhersagegröße 30 fällt. Somit wird sichergestellt, dass ein nicht überfahrbares Objekt nicht fehlerhaft als überfahrbares Objekt klassifiziert wird.

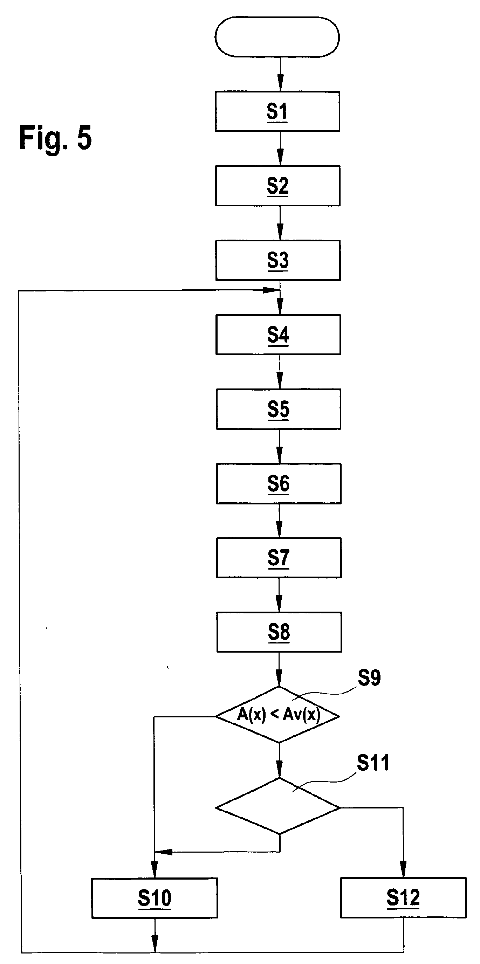

Fig. 5 zeigt ein Verfahren gemäß eines zweiten Ausführungsbeispiels, welches eine Weiterbildung des ersten Ausführungsbeispiels darstellt. Die Schritte S1 bis S9 dieses Ausführungsbeispiels entsprechen in diesem zweiten Ausführungsbeispiel den oben beschriebenen Schritten S1 bis S9, so dass hier lediglich auf die obigen Erläuterungen verwiesen wird.

Ist die Vorhersagegröße Av in Schritt S9 größer oder gleich der tatsächlichen Kenngröße A, dann springt das Verfahren zu Schritt S11. In Schritt S11 ermittelt die programmgesteuerte Einrichtung 11, ob im Verlauf der Kenngröße A(x) ein lokales Maximum vorliegt, also dem Verlauf der Kenngröße A(x) in den Fign. 3B oder 3C entspricht. Die Bestimmung eines lokalen Maximums kann beispielsweise durch Vergleich der aktuellen Kenngröße mit der vorherigen Kenngröße oder der in einem bestimmten Abstand zuvor ermittelten Kenngröße erfolgen. Dabei kann das Vorliegen eines lokalen Maximums dann bejaht werden, wenn der Unterschied zwischen diesen beiden Kenngrößen einen bestimmten Mindestunterschied überschreitet.

Das Vorliegen eines lokalen Maximums deutet darauf hin, dass das Objekt überfahrbar ist, so dass die Prozedur bei Vorliegen eines lokalen Maximums zu Schritt S 10 springt, in welchem ein entsprechendes Objektklassifizierungssignal ausgegeben wird. Falls kein lokales Maximum ermittelt wird, dann springt die Prozedur zu Schritt 12, in welchem ein entsprechendes Objektklassifizierungssignal ausgegeben wird.

Gemäß diesem zweiten Ausführungsbeispiels wird im Falle des in Fig. 3C dargestellten Szenarios das Objekt bereits kurz nach Vorliegen des lokalen Maximums der Kenngröße A(x) korrekt als überfahrbar eingeordnet, wohingegen im ersten Ausführungsbeispiel die Klassifizierung als überfahrbares Objekt erst zu dem Zeitpunkt erfolgt, in dem der Wert der Kenngröße A unter die Vorhersagegröße 30 fällt.

Obgleich die vorliegende Erfindung vorstehend anhand von bevorzugten Ausführungsformen beispielhaft beschrieben wurde, ist sie darauf nicht beschränkt, sondern auf vielfältige Art und Weise modifizierbar.

Beispielsweise wurden die Abstandssensoren 3, 5, 8, 9 als Ultraschallsensoren beschrieben. Es ist jedoch auch möglich, andere Typen von Sensoren (wie z.B. Radarsensoren, Lidarsensoren) zu verwenden, solange diese auf einem distanzmessenden Verfahren basieren.

Ferner wird gemäß der oben beschriebenen Ausführungsbeispiele die Klassifizierung in überfahrbare und nicht überfahrbare Objekte lediglich auf Basis der ausgewerteten Kenngröße durchgeführt. Es ist jedoch auch möglich, zur Klassifizierung weitere Informationen heranzuziehen und beispielsweise eine Plausibilisierung der Klassifizierung durchzuführen.

Ferner ist die Reihenfolge der Schritte der obigen Ausführungsbeispiele lediglich beispielhaft und kann variiert werden. Beispielsweise kann die zurückgelegte Strecke x auch vor Aussenden des Sendeimpulses ermittelt werden.

Ferner wurde das obige Objektklassifizierungsverfahren in Verbindung mit einem Einparkhilfeverfahren erläutert, es lässt sich jedoch ohne weiteres auch für andere Assistenzfunktionen, wie z.B. Anfahrhilfe, Parkstopp oder Manövrierhilfe in engen Straßen, verwenden.

**Patentansprüche**

1. Objektklassifizierungsverfahren zur Klassifizierung eines Objekts in einem Einparkhilfeverfahren zur Unterstützung eines Einparkvorgangs eines Fahrzeugs (1), bei dem sich das Fahrzeug (1) auf das Objekt zu bewegt, mit den Schrittem in der folgenden Rühenfolge:

   (a) Ermitteln einer ersten Kenngröße (A0) aus dem Verlauf eines mit einem distanzmessenden Sensor (3, 5, 8, 9) empfangenen ersten Empfangssignals;
   (b) Ermitteln einer weiteren Kenngröße (A) aus dem Verlauf eines mit dem distanzmessenden Sensor (3, 5, 8, 9) empfangenen zweiten Empfangssignals; **gekennzeichnet durch** die weiteren Schritte:
   (c) Ermitteln einer von dem Fahrzeug (1) zwischen Schritt (a) und Schritt (b) zurückgelegten Strecke (x);
   (d) Ermitteln einer Vorhersagegröße (Av) aus der ermittelten ersten Kenngröße (A0), wobei die Vorhersagegröße der in Schritt (c) ermittelten Strecke (x) zugeordnet ist;
   (e) Vergleichen der Vorhersagegröße (Av) mit der in Schritt (b) ermittelten weiteren Kenngröße (A);
   (f) Erzeugen eines dem Objekt zugeordneten Objektklassifikationssignals, welches einen ersten Zustand aufweist, falls die Vorhersagegröße (Av) kleiner als die weitere Kenngröße ist und welches einen zweiten Zustand aufweist, falls die Vorhersagegröße (Av) größer oder gleich der weiteren Kenngröße ist.

2. Verfahren nach Anspruch 1,
   wobei die Schritte (b) bis (f) periodisch wiederholt werden.

**EP 2 191 293 B1**

3. Verfahren nach einem der vorhergehenden Ansprüche,
wobei in Schritt (d) die Vorhersagegröße (Av) aus einer mathematischen Verknüpfung der ersten Kenngröße A0 mit einem Dämpfungsfaktor (k) ermittelt wird.

4. Verfahren nach Anspruch 3,
wobei in Schritt (d) die Vorhersagegröße (Av(x)) im Wesentlichen durch Multiplikation der in Schritt (a) ermittelten ersten Kenngröße (A0) mit einem Faktor $e^{kx}$ bestimmt wird, wobei k der Dämpfungsfaktor und x die in Schritt (c) ermittelte Strecke ist.

5. Verfahren nach Anspruch 3 oder 4,
wobei der Dämpfungsfaktor (k) in Abhängigkeit von den klimatischen Bedingungen eingestellt wird.

6. Verfahren nach einem der vorhergehenden Ansprüche,
wobei die erste und die weitere Kenngröße die Amplitude (25) eines lokalen Maximums im Empfangssignal angeben.

7. Verfahren nach einem der vorhergehenden Ansprüche, wobei zusätzlich die folgenden Schritte vorgesehen sind:

(i) Bestimmen eines momentanen Abstandes des Fahrzeugs (1) zu dem Objekt; und
(j) Ausgeben eines Warnsignals, falls der momentane Abstand geringer als ein Mindestabstand ist, wobei der Mindestabstand vom Zustand des Objektklassifikationssignals abhängt.

8. Computerprogramm, **gekennzeichnet durch** Programmcodemittel, um alle Schritte eines Verfahrens nach einem der vorhergehenden Ansprüche durchzuführen, wenn das Computerprogramm auf einem Computer oder einer Recheneinheit ausgeführt wird.

9. Einparkhilfesystem zur Unterstützung eines Einparkvorgangs eines Fahrzeugs (1), bei dem sich das Fahrzeug (1) auf das Objekt zu bewegt, wobei das Einparkhilfesystem einen distanzmessenden Sensor (3, 5, 8, 9), der periodisch ein Sendesignal vom Fahrzeug (1) in Richtung des Objekts aussendet und ein von dem Objekt reflektiertes Empfangssignal empfängt, aufweist, **dadurch gekennzeichnet, dass** weiterhin vorgesehen ist:

- eine programmgesteuerte Einrichtung (11), die in der folgenden Rühenfolge
eine erste Kenngröße (A0) aus dem Verlauf eines mit dem distanzmessenden Sensor (3, 5, 8, 9) empfangenen ersten Empfangssignals ermittelt,
eine weitere Kenngröße (A) aus dem Verlauf eines mit dem distanzmessenden Sensor (3, 5, 8, 9) empfangenen zweiten Empfangssignals ermittelt,
eine von dem Fahrzeug (1) zwischen dem Ermitteln der ersten Kenngröße und dem Ermitteln der zweiten Kenngröße zurückgelegte Strecke (x) ermittelt,
eine Vorhersagegröße aus der ersten ermittelten Kenngröße ermittelt, wobei die Vorhersagegröße der weiteren ermittelten Strecke (x) zugeordnet ist,
die Vorhersagegröße (Av) mit der weiteren Kenngröße (A) vergleicht; und
ein dem Objekt zugeordneten Objektklassifikationssignals erzeugt, welches einen ersten Zustand aufweist, falls die Vorhersagegröße (Av) kleiner als die weitere Kenngröße (A) ist und welches einen zweiten Zustand aufweist, falls die Vorhersagegröße (Av) größer oder gleich der weiteren Kenngröße (A) ist.

10. Einparkhilfesystem nach Anspruch 9, wobei der distanzmessende Sensor (3, 5, 8, 9) an einem Heckbereich oder an einem Frontbereich des Fahrzeugs (1) vorgesehen ist.


**Claims**

1. Object classification method for classifying an object in a parking assistance method for assisting a parking process of a vehicle (1), in which the vehicle (1) moves towards the object, having the steps in the following order:

(a) determination of a first characteristic variable (A0) from the profile of a first reception signal which is received with a distance-measuring sensor (3, 5, 8, 9);
(b) determination of a further characteristic variable (A) from the profile of a second reception signal which is received with the distance-measuring sensor (3, 5, 8, 9); **characterized by** the further steps:
(c) determination of a distance (x) travelled by the vehicle (1) between step (a) and step (b);

(d) determination of a predication variable (Av) from the determined first characteristic variable (A0), wherein the prediction variable is assigned to the distance (x) determined in step (c);

(e) comparison of the prediction variable (Av) with the further characteristic variable (A) determined in step (b);

(f) generation of an object classification signal which is assigned to the object and which has a first state if the prediction variable (Av) is smaller than the further characteristic variable, and which has a second state if the prediction variable (Av) is greater than or equal to the further characteristic variable.

2. Method according to Claim 1,
   wherein the steps (b) to (f) are repeated periodically.

3. Method according to one of the preceding claims, wherein in step (d) the prediction variable (Av) is determined from a mathematical combination of the first characteristic variable (A0) with an attenuation factor (k).

4. Method according to Claim 3,
   wherein in step (d) the prediction variable (Av(x)) is determined essentially by multiplication of the first characteristic variable (A0) determined in step (a) by a factor $e^{kx}$, wherein k is the attenuation factor and x is the distance determined in step (c).

5. Method according to Claim 3 or 4,
   wherein the attenuation factor (k) is set as a function of the climatic conditions.

6. Method according to one of the preceding claims,
   wherein the first and further characteristic variables specify the amplitude (25) of a local maximum value in the reception signal.

7. Method according to one of the preceding claims, wherein in addition the following steps are provided:

   (i) determination of an instantaneous distance between the vehicle (1) and the object; and
   (j) outputting of a warning signal if the instantaneous distance is smaller than a minimum distance, wherein the minimum distance depends on the state of the object classification signal.

8. Computer program, **characterized by** program code means for carrying out all the steps of a method according to one of the preceding claims when the computer program is run on a computer or a computing unit.

9. Parking assistance system for assisting a parking process of a vehicle (1), in which the vehicle (1) moves towards the object, wherein the parking assistance system has a distance-measuring sensor (3, 5, 8, 9) which periodically emits a transmission signal from the vehicle (1) in the direction of the object and receives a reception signal reflected by the object, **characterized in that** the following are also provided:

   - a program-controlled device (11) which, in the following order:

     determines a first characteristic variable (A0) from the profile of a first reception signal received with the distance-measuring sensor (3, 5, 8, 9),
     determines a further characteristic variable (A) from the profile of a second reception signal received with the distance-measuring sensor (3, 5, 8, 9),
     determines a distance (x) travelled by the vehicle (1) between the determination of the first characteristic variable and the determination of the second characteristic variable,
     determines a prediction variable from the first determined characteristic variable, wherein the prediction variable is assigned to the further determined distance (x),
     compares the prediction variable (Av) with the further characteristic variable (A); and
     generates an object classification signal which is assigned to the object and which has a first state if the prediction variable (Av) is smaller than the further characteristic variable (A), and which has a second state if the prediction variable (Av) is larger than or equal to the further characteristic variable (A).

10. Parking assistance system according to Claim 9, wherein the distance-measuring sensor (3, 5, 8, 9) is provided on a rear region or on a front region of the vehicle (1).

**Revendications**

1. Procédé de classification d'objets pour classifier un objet dans un procédé d'aide au stationnement pour assister une opération de stationnement d'un véhicule (1), lors de laquelle le véhicule (1) se déplace vers l'objet, comprenant les étapes dans l'ordre suivant :

   (a) Détermination d'une première grandeur caractéristique (A0) à partir de la courbe d'un premier signal de réception reçu avec un détecteur de mesure de distance (3, 5, 8, 9) ;
   (b) Détermination d'une grandeur caractéristique supplémentaire (A) à partir de la courbe d'un deuxième signal de réception reçu avec un détecteur de mesure de distance (3, 5, 8, 9) ; **caractérisé par** les étapes supplémentaires :
   (c) Détermination d'un trajet (x) parcouru par le véhicule (1) entre l'étape (a) et l'étape (b) ;
   (d) Détermination d'une grandeur prévisionnelle (Av) à partir de la première grandeur caractéristique (A0) déterminée, la grandeur prévisionnelle étant associée au trajet (x) déterminé à l'étape (c) ;
   (e) Comparaison de la grandeur prévisionnelle (Av) avec la grandeur caractéristique supplémentaire (A) déterminée à l'étape (b) ;
   (f) Génération d'un signal de classification d'objets associé à l'objet, lequel présente un premier état dans le cas où la grandeur prévisionnelle (Av) est inférieure à la grandeur caractéristique supplémentaire et présente un deuxième état dans le cas où la grandeur prévisionnelle (Av) est égale ou supérieure à la grandeur caractéristique supplémentaire.

2. Procédé selon la revendication 1, dans lequel les étapes (b) à (f) sont répétées périodiquement.

3. Procédé selon l'une des revendications précédentes, dans lequel, à l'étape (d), la grandeur prévisionnelle (Av) est déterminée à partir d'une combinaison mathématique de la première grandeur caractéristique (A0) avec un facteur d'atténuation (k).

4. Procédé selon la revendication 3, dans lequel, à l'étape (d), la grandeur prévisionnelle (Av(x)) est déterminée pour l'essentiel en multipliant la première grandeur caractéristique (A0) déterminée à l'étape (a) par un facteur $e^{kx}$, k étant le facteur d'atténuation et x le trajet déterminé à l'étape (c).

5. Procédé selon la revendication 3 ou 4, dans lequel le facteur d'atténuation (k) est réglé en fonction des conditions climatiques.

6. Procédé selon l'une des revendications précédentes, dans lequel la première grandeur caractéristique et la grandeur caractéristique supplémentaire indiquent l'amplitude (25) d'un maximum local dans le signal de réception.

7. Procédé selon l'une des revendications précédentes, dans lequel les étapes suivantes sont prévues en plus :

   (i) Détermination d'un écart momentané entre le véhicule (1) et l'objet ; et
   (j) Délivrance d'un signal d'alerte si l'écart momentané est inférieur à un écart minimum, l'écart minimum dépendant de l'état du signal de classification d'objets.

8. Programme informatique, **caractérisé par** des moyens de code de programme pour accomplir toutes les étapes d'un procédé selon l'une des revendications précédentes lorsque le programme informatique est exécuté sur un ordinateur ou sur une unité de calcul.

9. Système d'aide au stationnement pour assister une opération de stationnement d'un véhicule (1), lors de laquelle le véhicule (1) se déplace vers l'objet, le système d'aide au stationnement présentant un détecteur de mesure de distance (3, 5, 8, 9) qui émet périodiquement un signal d'émission du véhicule (1) en direction de l'objet et reçoit un signal de réception réfléchi par l'objet, **caractérisé en ce qu'**il est prévu en plus :

   - un dispositif programmable (11) qui, dans l'ordre suivant :

     détermine une première grandeur caractéristique (A0) à partir de la courbe d'un premier signal de réception reçu avec le détecteur de mesure de distance (3, 5, 8, 9) ;
     détermine une grandeur caractéristique supplémentaire (A) à partir de la courbe d'un deuxième signal de réception reçu avec le détecteur de mesure de distance (3, 5, 8, 9) ;

détermine un trajet (x) parcouru par le véhicule (1) entre la détermination de la première grandeur caractéristique et la détermination de la deuxième grandeur caractéristique ;

détermine une grandeur prévisionnelle à partir de la première grandeur caractéristique déterminée, la grandeur prévisionnelle étant associée à l'autre trajet (x) déterminé ;

compare la grandeur prévisionnelle (Av) avec la grandeur caractéristique supplémentaire (A) ; et

génère un signal de classification d'objets associé à l'objet, lequel présente un premier état dans le cas où la grandeur prévisionnelle (Av) est inférieure à la grandeur caractéristique supplémentaire (A) et présente un deuxième état dans le cas où la grandeur prévisionnelle (Av) est égale ou supérieure à la grandeur caractéristique supplémentaire (A).

10. Système d'aide au stationnement selon la revendication 9, dans lequel le détecteur de mesure de distance (3, 5, 8, 9) est prévu au niveau d'une région arrière ou d'une région avant du véhicule (1).

**Fig. 1**

**Fig. 2**

Fig. 3A

Fig. 3B

Fig. 3C

Fig. 3D

Fig. 4

S1

S2

S3

S4

S5

S6

S7

S8

S9

$A(x) < Av(x)$

S10

S12

**Fig. 5**

```
        ╭──────────╮
        ╰────┬─────╯
             │
             ▼
        ┌─────────┐
        │   S1    │
        └────┬────┘
             │
             ▼
        ┌─────────┐
        │   S2    │
        └────┬────┘
             │
             ▼
        ┌─────────┐
        │   S3    │
        └────┬────┘
             │
             ▼
        ┌─────────┐
        │   S4    │
        └────┬────┘
             │
             ▼
        ┌─────────┐
        │   S5    │
        └────┬────┘
             │
             ▼
        ┌─────────┐
        │   S6    │
        └────┬────┘
             │
             ▼
        ┌─────────┐
        │   S7    │
        └────┬────┘
             │
             ▼
        ┌─────────┐
        │   S8    │
        └────┬────┘
             │
             ▼        S9
          ◇─────────◇
         ◇ A(x) < Av(x) ◇
          ◇─────────◇
             │          S11
             ▼         ◇───◇
          ◇─────────◇
          ◇─────────◇
             │            │
             ▼            ▼
        ┌─────────┐  ┌─────────┐
        │   S10   │  │   S12   │
        └─────────┘  └─────────┘
```

$A(x) < Av(x)$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10323639 A1
- EP 1643271 A